# EUROPÄISCHE PATENTSCHRIFT

(11) **EP 0 982 786 B1**
(45) Veröffentlichungstag und Bekanntmachung des Hinweises auf die Patenterteilung: **31.07.2002**
(21) Anmeldenummer: 99111301.0
(22) Anmeldetag: 10.06.1999
(51) Int. Cl.: H01M 2/38, H01M 2/36

(54) **Zellendeckel für eine Akkumulatorenbatterie**
Cell cover for an accumulator
Couverture pour cellule d'une batterie d'accumulateur

(30) Priorität: 28.08.1998 DE 19839211
(43) Veröffentlichungstag der Anmeldung: 01.03.2000
(73) Patentinhaber: HAWKER GmbH, 58089 Hagen (DE)
(72) Erfinder: Trimborn, Jens, 42119 Wuppertal (DE); Martin, Dieter, 78333 Stockach (DE); Woeffler, Friedrich, 61389 Schmitten (DE)
(74) Vertreter: Köchling, Conrad-Joachim

(56) Entgegenhaltungen:
- WO-A-94/29907
- US-A- 1 996 843

## Beschreibung

Die Erfindung betrifft einen Zellendeckel für eine Akkumulatorenbatterie mit in einem Zellenkasten angeordneten Elektrodenplatten und Elektrolyt, wobei der Zellendeckel einen ersten Anschluß zum Einsatz eines Nachfüllmittels und/oder mindestens einen zweiten Anschluß zum Einsatz von Elektrolytumwälzmitteln aufweist, wobei jede Zelle der Akkumulatorenbatterie einen Zellendeckel aufweist und bei installiertem Nachfüllanschluß und/oder Elektrolytumwälzmittel die Nachfüllanschlüsse aller oder mehrerer Zellendeckel miteinander über erste Verbindungsmittel in Verbindung stehen und/oder die Elektrolytumwälzmittel aller oder mehrerer Zellendeckel miteinander über zweite Verbindungsmittel in Verbindung stehen.

Typische Batterien dieser Gattung sind BleiAkkumulatoren zum Antrieb von Flurförderfahrzeugen. Um die Wartungsfreundlichkeit dieser Batterien zu erhöhen, ist es üblich, die Zellen/Blockbatterien mit einer Elektrolytumwälzung zur Umwälzung des Elektrolyten zu bestücken. Hierbei wird in jeder einzelnen Zelle eine Elektrolytumwälzung installiert, durch welche Luft in die Zelle einströmt und damit den Elektrolyten umwälzt. Außerhalb der Zellen werden diese Elektrolytumwälzungen durch ein Schlauchsystem miteinander verbunden.

Da es bei einer Batterie im Dauerlastbetrieb zu einer sogenannten Entgasung kommt, verliert die Batterie ständig eine geringe Elektrolytmenge, so daß der Elektrolytspiegel absinkt und die Elektroden aus dem Elektrolyten herausragen. Dies führt zur Beschädigung der Elektroden. Aus diesem Grunde muß der entsprechende Akkumulator in ständigen Wartungsintervallen auf die Elektrolytstandhöhe überprüft und ggf. nachgefüllt werden. Dieser Vorgang wird mit einem Wassernachfüllsystem automatisiert. Hierbei wird in jede Zelle/Blockbatterie ein Zellenstopfen mit einem Schwimmersystem eingebaut. Diese Zellenstopfen sind mit einem Schlauchsystem untereinander verbunden. Bei Wartungsarbeiten bzw. Ladevorgängen wird durch dieses Schlauchsystem destilliertes Wasser zugeführt. Das Schwimmersystem des Zellenstopfens reguliert damit den Elektrolytstand.

Die Versorgungsleitungen der Elektrolytumwälzung und des Wassernachfüllsystems sind oberhalb der Zellen/Blockbatterie angebracht. Diese Art der Zellenversorgung ist mit einem sehr großen Montageaufwand der Versorgungsleitungen verbunden, da jede einzelne Zelle bzw. jedes Wassernachfüllsystem einzeln angeschlossen werden muß. Sofern sowohl eine Elektrolytumwälzung als auch ein Wassernachfüllsystem installiert wird, sind die Verschaltungen und die Schlauchverbindungen sehr unübersichtlich. Es wird zudem ein zusätzlicher Raum oberhalb der Zellen/Blockbatterie und der Batterieoberkante benötigt. Diese Installation ist anfällig gegen äußerliche Beschädigungen. Zudem ist es schwer, die verschmutzten Zellen/Blockbatteriendeckel zu reinigen.
Ausgehend von diesem Stand der Technik liegt der Erfindung die Aufgabe zugrunde, einen Zellendeckel für Akkumulatorenbatterien zu schaffen, der leicht zu reinigen ist, und bei dem eine Beschädigung des Elektrolytumwälzsystems oder des Wassernachfüllsystems oder beider Systeme weitgehend vermieden ist.

Zur Lösung dieser Aufgabe wird vorgeschlagen, daß die ersten Verbindungsmittel durch in den Zellendeckel integrierte erste Kanäle gebildet sind, die jeweils mit dem ersten Anschluß in leitungsoffener Verbindung stehen, sowie durch erste Verbindungsstücke, mittels derer die Kanäle benachbarter Zellendeckel miteinander strömungsmäßig verbindbar oder verbunden sind, und daß die zweiten Verbindungsmittel durch in den Zellendeckel integrierte zweite Kanäle gebildet sind, die die zweiten Anschlüsse des Zellendeckels miteinander strömungsmäßig verbinden, sowie durch zweite Verbindungsstücke, mittels derer die zweiten Kanäle benachbarter Zellendeckel miteinander verbindbar oder verbunden sind.

Durch diese Ausbildung werden wesentliche Bestandteile der Elektrolytumwälzung und/oder des Wassernachfüllsystems in den Deckel integriert, so daß die bisher üblichen installationsintensiven und gegen Beschädigung gefährdeten Schlauchsysteme vermieden sind. Zudem ist die äußere Oberfläche des Zellendeckels auch bei installierten Systemen weitestgehend zugänglich, so daß eine relativ leichte Reinigung möglich ist.

Bevorzugte Weiterbildungen sind in den Unteransprüchen angegeben.

Ein Ausführungsbeispiel ist in der Zeichnung gezeigt und im folgenden näher beschrieben.

Es zeigt:

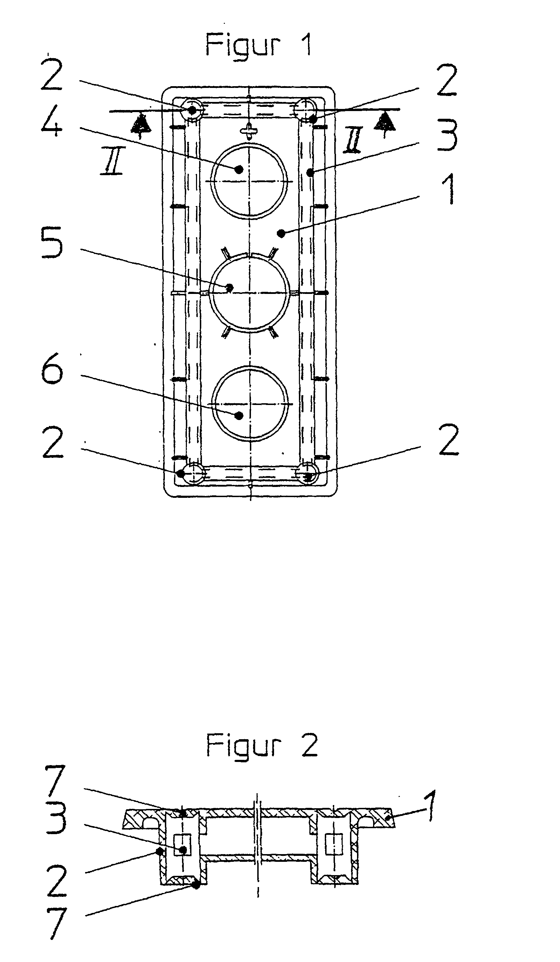

- Figur 1: einen Zellendeckel in Unteransicht;
- Figur 2: einen Schnitt entsprechend der Schnittlinie II-II der Figur 1 gesehen;
- Figur 3 und 4: Einzelheiten in Ansicht; teilweise geschnitten;
- Figur 5: eine Darstellung analog Figur 2 mit zwei nebeneinander angeordneten Deckeln und Installationssystemen;
- Figur 6: einen Zellendeckel in Draufsicht, teilweise geschnitten;
- Figur 7: einen Schnitt analog der Schnittlinie VII-VII der Figur 6 gesehen;
- Figur 8 und 9: Einzelheiten in Ansicht, teilweise geschnitten;
- Figur 10: zwei nebeneinander angeordnete Zellendeckel mit Wassernachfüllsystemen;
- Figur 11: einen Zellendeckel in Draufsicht, bei dem die Ausbildungen nach Figur 1 und Figur 6 miteinander kombiniert sind.

In der Zeichnung ist ein Zellendeckel 1 gezeigt. Der Zellendeckel ist Bestandteil einer Akkumulatorenbatterie, bei der in einem Zellenkasten Elektrodenplatten und Elektrolyt angeordnet ist und der Zellenkasten durch den Zellendeckel verschlossen ist. Der Zellendeckel weist eine Poldurchführung 4 und eine Poldurchführung 6 auf. Ferner weist der Zellendeckel einen Anschluß zum Einsatz eines Nachfüllmittels für destilliertes Wasser und/oder mindestens einen zweiten Anschluß zum Einsatz von Mitteln zum Umwälzen des Elektrolyten auf. Jede Zelle der Akkumulatorenbatterie weist einen solchen Zellendeckel 1 auf. Bei installiertem Nachfüllanschluß und/oder Elektrolytumwälzmittel sind die Nachfüllanschlüsse aller oder mehrerer Zellendeckel 1 miteinander über erste Verbindungsmittel in Verbindung und/oder die Elektrolytumwälzmittel aller oder mehrerer Zellendeckel sind miteinander über zweite Verbindungsmittel verbunden.

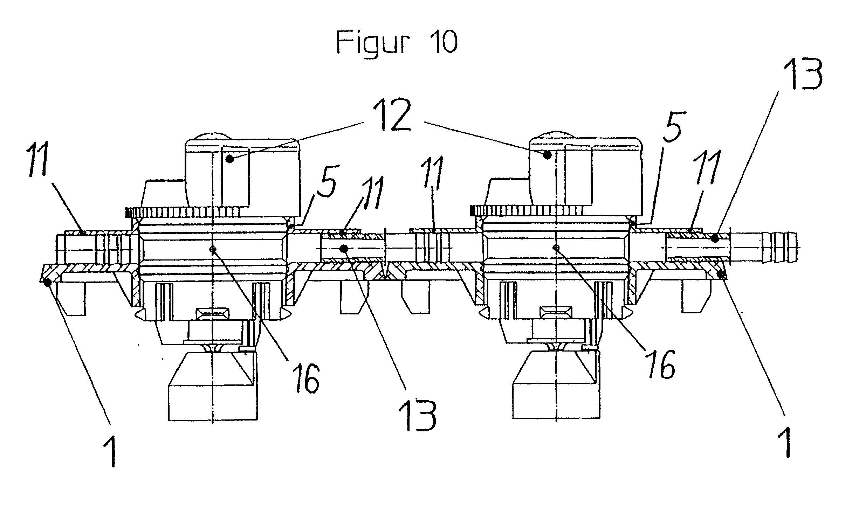

Die ersten Verbindungsmittel sind durch in den Zellendeckel 1 integrierte erste Kanäle 11 gebildet, die jeweils mit dem ersten Anschluß (bei 5) in leitungsoffener Verbindung stehen und nach außen offen enden. Ferner sind erste Verbindungsstücke 13 vorgesehen, mittels derer die Kanäle 11 benachbarter Zellendeckel 1 miteinander strömungsmäßig verbunden sind, wie aus Figur 10 ersichtlich. Die zweiten Verbindungsmittel sind durch in den Zellendeckel 1 integrierte zweite Kanäle 3 gebildet, die die zweiten Anschlüsse (bei 2) des Zellendeckels 1 miteinander strömungsmäßig verbinden, sowie durch zweite Verbindungsstücke 10, mittels derer die zweiten Kanäle 3 benachbarter Zellendeckel 1 verbunden sind.

Der erste Anschluß ist als den Zellendeckel orthogonal durchsetzender Stutzen 5 ausgebildet, in den die einstückig mit dem Zellendeckel 1 ausgebildeten ersten Kanäle 11 radial einmünden. Im Ausführungsbeispiel sind zwei erste Kanäle 11 an den Stutzen 5 koaxial zueinander angeschlossen. Die ersten Kanäle 11 reichen vom Stutzen 5 bis nahe der Außenrandkante des Deckels 1. Die ersten Verbindungsstücke 13 sind durch gerade rohrartige Kupplungsstücke gebildet, die in die zueinander koaxialen Enden der ersten Kanäle 11 zweier benachbarter Deckelteile 1 eingesteckt sind.

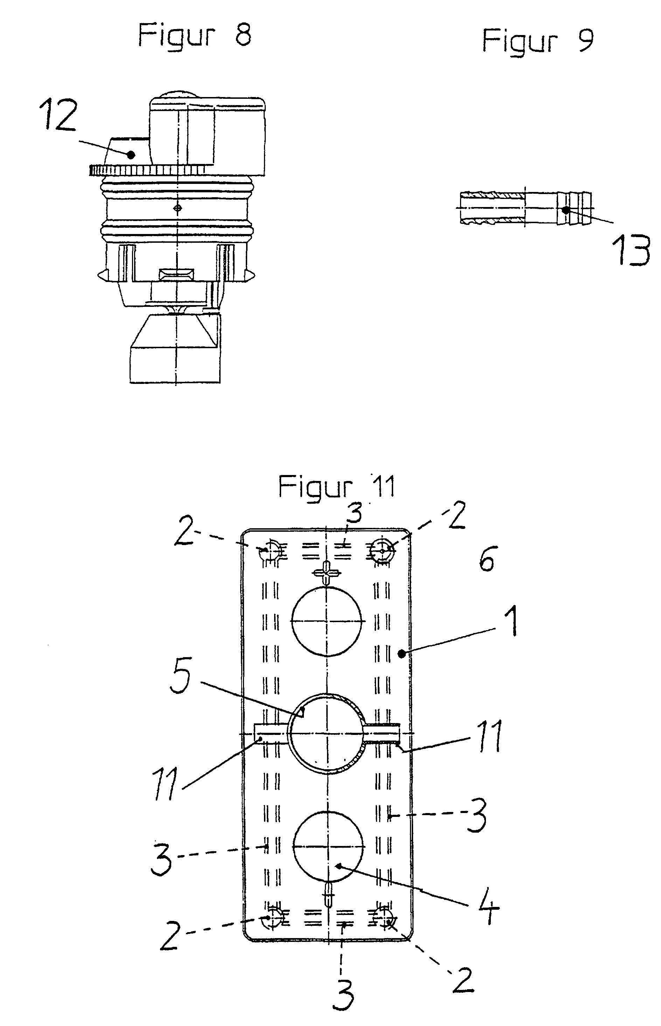

Das in den Anschluß bzw. Stutzen 5 einsetzbare Nachfüllmittel 12 ist ein Wassernachfüllstopfen mit in der Zelle liegendem Schwimmersystem (in Figur 8 und Figur 10 unten ersichtlich), wobei eine leitungsoffene Verbindung zwischen den ersten Kanälen 11, dem Innenhohlraum des Stopfens 12 und der Zelle (in Figur 10 unterhalb des Deckels) besteht. Der zur Zelle (in Zeichnungsfigur 10 nach unten) offene Ausgang des Stopfens 12 ist durch das Schwimmersystem je nach Flüssigkeitsstand freigegeben oder abgesperrt.

Der Strömungsdurchgang von den zweiten Kanälen 11 in das Innere des Stopfens 12 kann durch die Lochung 16 in der Stopfenwandung erfolgen.

Die zweiten Anschlüsse sind durch Stutzen 2 gebildet, die den Deckel 1 orthogonal durchsetzen und in die die zweiten Kanäle 3 radial einmünden.

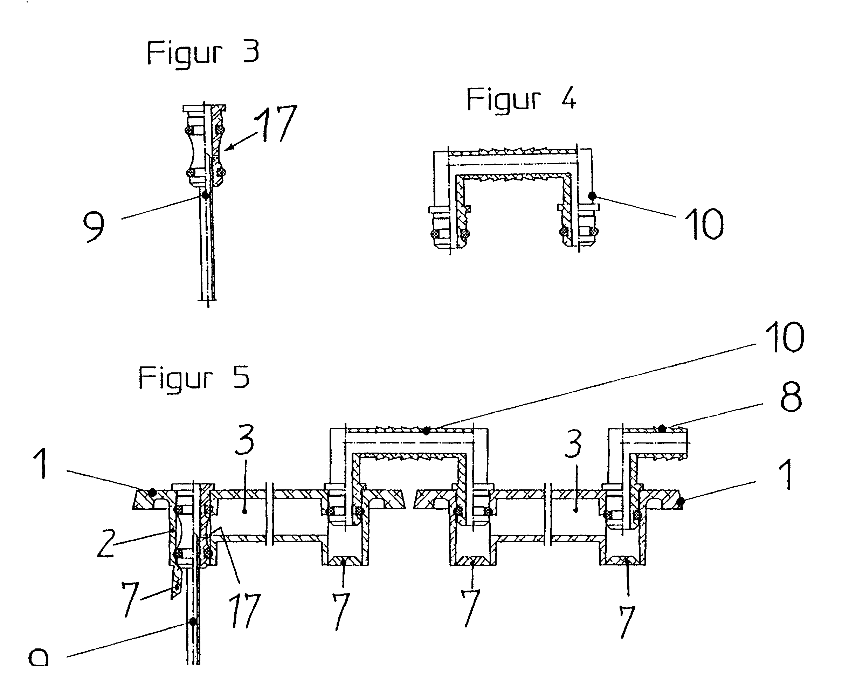

Im Ausführungsbeispiel sind vier Stutzen 2 in den Eckbereichen des in Draufsicht rechteckigen Deckels 1 angeordnet, wobei die Stutzen 2 durch die zweiten Kanäle 3 nach Art einer Ringleitung miteinander in Verbindung stehen. Die zweiten Kanäle 3 sind jeweils entlang der Außenrandkanten des Deckels 1 ausgebildet und angeordnet. Die Stutzen 2 weisen an ihren beiden Enden ausbrechbare, vorzugsweise über Sollbruchstellen angeformte Deckeleile 7 auf. Das Mittel zum Umwälzen von Elektrolyt besteht aus mindestens einem Luftanschlußteil 8 und einer Luftlanze 9. Das Luftanschlußteil 8 ist gedichtet in einen der Stutzen 2 einsteckbar, wobei in diesem Falle der obere Deckel 7 ausgebrochen wird. Der untere Deckel 7 bleibt in der Schließlage, wie beispielsweise anhand von Figur 5 verdeutlicht ist. Die Luftlanze 9 ist abgedichtet in einen Stutzen 2 eingesetzt, wobei dieses Element den Stutzen vollständig durchgreift, so daß beide Deckelteile 7 ausgebrochen sind. Nach außen ist im Bereich der Luftlanze die entsprechende Öffnung des Stutzens 2 verschlossen, die Luftlanze 9 ist dazu in einen hohlen Stopfen eingesetzt, der gedichtet in einen Stutzen 2 eingesetzt ist. Die Dichtungen sind an den beiden Endbereichen des hohlen Stopfens der Luftlanze 9. Der Stopfen ist im Mittelbereich eingeschnürt, so daß ein umlaufender Fluiddurchlaßspalt mit der Stutzenwandung gebildet ist. Im Bereich der Einschnürung ist ein Fluiddurchlaß 17 zum hohlen Stopfeninnenraum gebildet, der mit der rohrartig ausgebildeten Luftlanze in strömungsoffener Verbindung steht.

Das zweite Verbindungsmittel ist durch ein Verbindungsstück 10 gebildet, welches im Ausführungsbeispiel U-förmig und rohrartig ausgebildet ist. Es ist mit seinen Enden abgedichtet in zwei Anschlüsse bzw. Stutzen 2 benachbarter Deckel eingesteckt, wobei wiederum die oberen Verschlußteile 7 ausgebrochen sind und die unteren Verschlußteile 7 beibehalten sind.

Durch die erfindungsgemäße Ausbildung ist die Weiterleitung des jeweiligen fluiden Mediums zur benachbarten Zelle ohne weiteres möglich. Die Stutzen 2 sind in die zweiten Kanäle integriert, so daß ein durchgehendes Leitungssystem gebildet ist. Diese Ausbildung dient dazu, die Einleitung des Mediums zur Elektrolytumwälzung in den Deckel 1 zu ermöglichen und die Verbindung des Mediums mit benachbarten Zellen der Blockbatterie über benachbarte Deckel 1 zu ermöglichen. Die über Sollbruchstellen gehaltenen Deckelteile 7 bewirken, daß das Medium in den zweiten Kanälen 3 gehalten wird. Nur bei Bedarf ermöglicht die über Sollbruchstellen vereinfachte Entfernung dieser Deckel 7 den Zugang zu der jeweiligen Zelle bzw. zum Versorgungskanalsystem. Wenn eine Elektrolytumwälzung benötigt wird, wird ein Stutzen 2 auf der Deckeloberseite durchstoßen und mit einem Luftanschluß 8 analog der Ausbildung in Figur 5 versehen. In einen anderen beliebigen Stutzen 2 kann die Luftlanze 9 in die Zelle eingefügt werden. Es ist somit eine Elektrolytumwälzung in der jeweiligen Zelle ermöglicht. Sofern mehrere Zellen zum Zwecke der Elektrolytumwälzung miteinander verbunden werden sollen, wird das Verbindungsstück 10 installiert, wie aus Figur 5 ersichtlich. Dabei kann beispielsweise der. Luftanschluß 8 in einem Zellendeckel 1 angeordnet sein und die Luftlanze 9 in einem anderen Deckel 1 angeordnet und gehalten sein, wobei die mit den Deckel versehenen Zellen durch die Verbindungsstücke 19 miteinander verbunden sind. In Variation kann auch das Verbindungsstück 10 einseitig eine Luftlanze aufweisen, so daß die Luftlanze 9 zusammen mit dem Verbindungsstück 10 eingesetzt werden kann. Es sind auch andere Varianten nach diesem Prinzip mit dem Luftanschluß 8 oder anderen Peripheriekomponenten, wie z.B. Temperaturfühlern, Elektrolytstandsanzeiger oder dergleichen möglich.

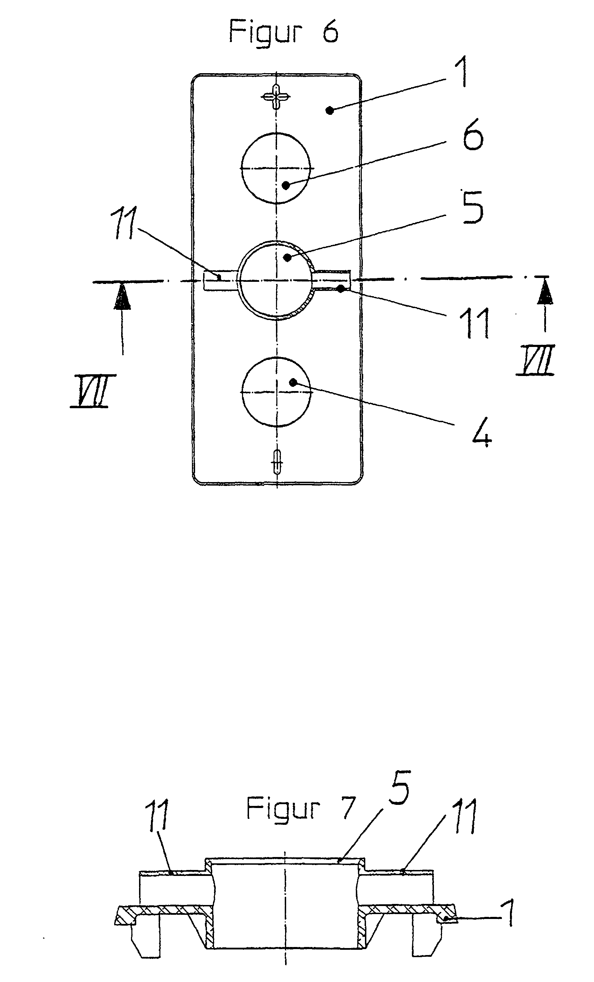

Bei der Darstellung nach Figur 6 bis 10 kann der zentrale Anschlußstutzen 5 im Normalfall mit einem Verschlußstopfen versehen sein. Um Wasser nachfüllen zu können, wird in den Anschlußstutzen 5 ein Wassernachfüllstopfen 12 eingesetzt. Desweiteren werden die ersten Kanäle 11 benachbarter Deckel 1 durch Verbindungsstücke 13 miteinander verbunden. Ein solches Verbindungsstück 13 kann zum Anschluß der Zuführung für Wasser genutzt werden. Nach diesem Prinzip lassen sich beliebig viele Zellen/Blockbatterien miteinander verbinden.

In Figur 11 ist ein Zellendeckel 1 gezeigt, bei dem sowohl die Systemanordnung für Elektrolytumwälzung als auch diese Systemanordnung für das Wassernachfüllsystem vorgesehen sind.

Die Erfindung ist nicht auf das Ausführungsbeispiel beschränkt, sondern im Rahmen der Offenbarung vielfach variabel.

## Patentansprüche

1. Zellendeckel für eine Akkumulatorenbatterie mit in einem Zellenkasten angeordneten Elektrodenplatten und Elektrolyt, wobei der Zellendeckel einen ersten Anschluß zum Einsatz eines Nachfüllmittels und/oder mindestens einen zweiten Anschluß zum Einsatz von Elektrolytumwälzmitteln aufweist, wobei jede Zelle der Akkumulatorenbatterie einen Zellendeckel aufweist und bei installiertem Nachfüllanschluß und/oder Elektrolytumwälzmittel die Nachfüllanschlüsse aller oder mehrerer Zellendeckel miteinander über erste Verbindungsmittel in Verbindung stehen und/oder die Elektrolytumwälzmittel aller oder mehrerer Zellendeckel miteinander über zweite Verbindungsmittel in Verbindung stehen,
**dadurch gekennzeichnet, daß** die ersten Verbindungsmittel durch in den Zellendeckel (1) integrierte erste Kanäle (11) gebildet sind, die jeweils mit dem ersten Anschluß in leitungsoffener Verbindung stehen, sowie durch erste Verbindungsstücke (13), mittels derer die Kanäle (1) benachbarter Zellendeckel (1) miteinander strömungsmäßig verbindbar oder verbunden sind, und/oder daß die zweiten Verbindungsmittel durch in den Zellendeckel (1) integrierte zweite Kanäle (3) gebildet sind, die die zweiten Anschlüsse des Zellendeckels (1) miteinander strömungsmäßig verbinden, sowie durch zweite Verbindungsstücke (10), mittels derer die zweiten Kanäle (3) benachbarter Zellendeckel (1) miteinander verbindbar oder verbunden sind.

2. Zellendeckel nach Anspruch 1,
**dadurch gekennzeichnet, daß** der erste Anschluß als den Zellendeckel (1) orthogonal durchsetzender Stutzen (5) ausgebildet ist, in den die einstückig mit dem Zellendeckel (1) ausgebildeten ersten Kanäle (11) radial einmünden.

3. Zellendeckel nach Anspruch 1 oder 2,
**dadurch gekennzeichnet, daß** zwei erste Kanäle (11) an den ersten Anschluß bzw. den Stutzen (5) koaxial angeschlossen sind.

4. Zellendeckel nach einem der Ansprüche 1 bis 3,
**dadurch gekennzeichnet, daß** die ersten Kanäle (11) vom ersten Anschluß bzw. Stutzen (5) bis nahe der Randkante des Deckels (1) verlaufen.

5. Zellendeckel nach einem der Ansprüche 1 bis 4,
**dadurch gekennzeichnet, daß** die ersten Verbindungsstücke (13) durch gerade rohrartige Kupplungsstücke gebildet sind.

6. Zellendeckel nach einem der Ansprüche 1 bis 5,
**dadurch gekennzeichnet, daß** das in den Anschluß bzw. Stutzen (5) einsetzbare Nachfüllmittel ein Wassernachfüllstopfen (12) mit in der Zelle liegendem Schwimmersystem ist, wobei eine leitungsoffene Verbindung zwischen den ersten Kanälen (1), dem Innenhohlraum des Stopfens (12) und der Zelle besteht, und der zur Zelle offene Ausgang des Stopfens (12) durch das Schwimmersystem freigebbar oder absperrbar ist.

7. Zellendeckel nach einem der Ansprüche 1 bis 6,
**dadurch gekennzeichnet, daß** die zweiten Anschlüsse durch Stutzen (2) gebildet sind, die den Deckel orthogonal durchsetzen und in die die zweiten Kanäle (3) radial einmünden.

8. Zellendeckel nach Anspruch 7,
**dadurch gekennzeichnet, daß** die Stutzen (2) in den Eckbereichen des in Draufsicht rechteckigen Deckels (1) angeordnet sind, wobei die Stutzen (2) durch die zweiten Kanäle (3) miteinander in Verbindung stehen.

9. Zellendeckel nach Anspruch 7 oder 8,
**dadurch gekennzeichnet, daß** jeweils ein zweiter Kanal (3) nahe einer Außenrandkante des Deckels (1) ausgebildet ist.

10. Zellendeckel nach einem der Ansprüche 7 bis 9,
**dadurch gekennzeichnet, daß** die Stutzen (2) an ihren Enden ausbrechbare, vorzugsweise über Sollbruchstellen angeformte Deckelteile (7) aufweisen.

11. Zellendeckel nach einem der Ansprüche 7 bis 10,
**dadurch gekennzeichnet, daß** das Elektrolytumwälzmittel aus mindestens einem Luftanschlußteil (8) und einer Luftlanze (9) bestehen, wobei das Luftanschlußteil (8) in einen der Stutzen (2) einsteckbar ist und die Luftlanze (9) in einen Stutzen (2), diesen vollständig durchgreifend einsetzbar ist.

12. Zellendeckel nach Anspruch 11,
**dadurch gekennzeichnet, daß** die Luftlanze (9) in einen hohlen Stopfen eingesetzt ist, der in einen Stutzen (2), die offenen Enden des Stutzens (2) abdichtend eingefügt ist, wobei der Stopfen im Mittelbereich des Stutzens (2) eingeschnürt ist und einen umlaufenden Fluiddurchlaßspalt mit der Stutzenwandung bildet und wobei im Bereich der Einschnürung ein Fluiddurchlaß (17) zum hohlen Stopfeninnenraum gebildet ist, der mit der Luftlanze (9) in strömungsoffener Verbindung steht.

13. Zellendeckel nach Anspruch 1, und nach einem der Ansprüche 7 bis 12,
**dadurch gekennzeichnet, daß** das zweite Verbindungsmittel durch ein Verbindungsstück (10) gebildet ist, welches rohrartig ausgebildet ist und mit seinen Enden abgedichtet in zwei Anschlüsse bzw. Stutzen (2) benachbarter Deckel (1) einsteckbar ist.

## Claims

1. A cell cover for an accumulator battery having electrode plates and electrolyte disposed in a cell case, wherein the cell cover comprises a first connection for the introduction of a topping-up means and/or at least a second connection for the introduction of electrolyte circulating means, wherein each cell of the accumulator battery comprises a cell cover and, when the topping-up connection and/or electrolyte circulation means are installed, the topping-up connections of all or several cell covers communicate with one another via first connection means and/or the electrolyte circulation means of all or several cell covers communicate with one another via second connection means,
**characterised in that** the first connection means are formed by first ducts (11) integrated into the cell cover (1), which in each case communicate, with open lines, with the first connection, and also by first joining pieces (13), by means of which the ducts (1) of adjacent cell covers (1) can be connected or are connected to one another in terms of flow,
**and/or in that** the second connection means are formed by second ducts (3) integrated into the cell cover (1), which connect the second connections of the cell cover (1) to one another in terms of flow, and also by second joining pieces (10), by means of which the second ducts (3) of adjacent cell covers (1) can be connected or are connected to one another.

2. A cell cover according to Claim 1,
**characterised in that** the first connection is constructed as a connection piece (5) passing orthogonally through the cell cover (1), into which the first ducts (11) constructed in one piece with the cell cover (1) radially discharge.

3. A cell cover according to Claim 1 or 2,
**characterised in that** two first ducts (11) are coaxially connected to the first connection or the connection piece (5).

4. A cell cover according to one of Claims 1 to 3,
**characterised in that** the first ducts (11) run from the first connection or connection piece (5) to close to the edge of the cover (1).

5. A cell cover according to one of Claims 1 to 4,
**characterised in that** the first joining pieces (13) are formed by straight tubular coupling pieces.

6. A cell cover according to one of Claims 1 to 5,
**characterised in that** the topping-up means which can be introduced into the connection or connection piece (5) is a water topping-up plug (12) with a float system lying in the cell, wherein there is an open-line connection between the first ducts (1), the inner cavity of the plug (12) and the cell, and the outlet of the plug (12) open to the cell can be uncovered or closed by the float system.

7. A cell cover according to one of Claims 1 to 6,
**characterised in that** the second connections are formed by connection pieces (2), which orthogonally pass through the cover and into which the second ducts (3) radially discharge.

8. A cell cover according to Claim 7,
**characterised in that** the connection pieces (2) are disposed in the corner regions of the cover (1) having a rectangular plan view, with the connection pieces (2) communicating with one another by the second ducts (3).

9. A cell cover according to Claim 7 or 8,
**characterised in that** in each case a second duct (3) is constructed close to an outer edge of the cover (1).

10. A cell cover according to one of Claims 7 to 9,
**characterised in that** the connection pieces (2) comprise cover parts (7) which can be broken off at their ends, preferably formed by predetermined breaking points.

11. A cell cover according to one of Claims 7 to 10,
**characterised in that** the electrolyte circulation means consist of at least one air connection part (8) and an air lance (9), with the air connection part (8) being insertable into one of the connection pieces (2) and the air lance (9) being insertable into a connection piece (2) and passing completely through it.

12. A cell cover according to Claim 11,
**characterised in that** the air lance (9) is inserted into a hollow plug which is inserted into a connection piece (2), sealing the open ends of the connection piece (2), wherein the plug is constricted in the middle region of the connection piece (2) and forms a circumferential fluid passage gap with the wall of the connection piece and wherein in the region of the constriction a fluid passage (17) to the hollow interior of the plug is formed, which is in open-flow communication with the air lance (9).

13. A cell cover according to. Claim 1, and according to one of Claims 7 to 12,
**characterised in that** the second connection means is formed by a joining piece (10), which has a tubular construction and can be inserted with its ends sealed into two connections or connection pieces (2) of adjacent covers (1).

## Revendications

1. Couvercle d'éléments pour une batterie d'accumulateurs avec des plaques d'électrodes disposées dans un bac d'éléments et de l'électrolyte, le couvercle d'éléments présentant un premier branchement pour l'utilisation d'un moyen de remplissage et/ou au moins un deuxième branchement pour l'utilisation de moyens de circulation d'électrolyte, chaque élément de la batterie d'accumulateurs présentant un couvercle d'éléments et, lorsque le branchement de remplissage et/ou le moyen de circulation d'électrolyte est installé, les branchements de remplissage de tous ou de plusieurs couvercles d'éléments sont reliés entre eux par des premiers moyens de liaison et/ou les moyens de circulation d'électrolyte de tous ou de plusieurs couvercles d'éléments sont reliés entre eux par des seconds moyens de liaison, **caractérisé en ce que** les premiers moyens de liaison sont formés par des premiers canaux (11) intégrés dans le couvercle d'éléments (1), qui sont respectivement en liaison ouverte sur une conduite avec le premier branchement, et par des premières pièces de liaison (13), au moyen desquelles les canaux (11) de couvercles d'éléments (1) voisins peuvent être reliés ou sont reliés entre eux au niveau de l'écoulement, et/ou **en ce que** les seconds moyens de liaison sont formés par des seconds canaux (3) intégrés dans le couvercle d'éléments (1), qui relient entre eux au niveau de l'écoulement les seconds branchements du couvercle d'éléments (1), et par des secondes pièces de liaison (10), au moyen desquelles les seconds canaux (3) de couvercles d'éléments (1) voisins peuvent être reliés ou sont reliés entre eux.

2. Couvercle d'éléments selon la revendication 1, **caractérisé en ce que** le premier branchement est conçu comme une tubulure (5) traversant à la perpendiculaire le couvercle d'éléments (1), dans laquelle débouchent les premiers canaux (11) conçus d'une seule pièce avec le couvercle d'éléments (1).

3. Couvercle d'éléments selon la revendication 1 ou 2, **caractérisé en ce que** deux premiers canaux (11) sont raccordés de façon coaxiale au premier branchement ou à la tubulure (5).

4. Couvercle d'éléments selon l'une quelconque des revendications 1 à 3, **caractérisé en ce que** les premiers canaux (11) vont du premier branchement ou de la première tubulure (5) jusqu'à proximité de l'arête de bord du couvercle (1).

5. Couvercle d'éléments selon l'une quelconque des revendications 1 à 4, **caractérisé en ce que** les premières pièces de liaison (13) sont formées par des pièces d'accouplement droites et de forme tubulaire.

6. Couvercle d'éléments selon l'une quelconque des revendications 1 à 5, **caractérisé en ce que** l'agent de remplissage pouvant être inséré dans le branchement ou la tubulure (5) est un bouchon de remplissage d'eau (12) avec un système de flotteur disposé dans l'élément, une liaison ouverte sur la conduite existant entre les premiers canaux (1), l'espace creux intérieur du bouchon (12) et l'élément, et la sortie, ouverte vers l'élément, du bouchon (12) pouvant être dégagée ou bloquée par le système de flotteur.

7. Couvercle d'éléments selon l'une quelconque des revendications 1 à 6, **caractérisé en ce que** les seconds branchements sont formés par des tubulures (2) qui traversent le couvercle à la perpendiculaire et dans lesquelles les seconds canaux (3) débouchent de façon radiale.

8. Couvercle d'éléments selon la revendication 7, **caractérisé en ce que** les tubulures (2) sont disposées dans les zones d'angle du couvercle (1) rectangulaire en vue de dessus, les tubulures (2) étant reliées entre elles par les seconds canaux (3).

9. Couvercle d'éléments selon la revendication 7 ou 8, **caractérisé en ce que** respectivement un second canal (3) est réalisé à proximité d'une arête de bord extérieur du couvercle (1).

10. Couvercle d'éléments selon l'une quelconque des revendications 7 à 9, **caractérisé en ce que** les tubulures (2) présentent sur leurs extrémités des parties de couvercle (7) qui peuvent être arrachées et sont formées de préférence au-dessus de points de rupture théorique.

11. Couvercle d'éléments selon l'une quelconque des revendications 7 à 10, **caractérisé en ce que** le moyen de circulation d'électrolyte comprend au moins une partie de branchement d'air (8) et une lance à air (9), la partie de branchement d'air (8) pouvant être emboîtée dans l'une des tubulures (2) et la lance à air (9) pouvant être insérée dans une tubulure (2) en traversant complètement celle-ci.

12. Couvercle d'éléments selon la revendication 11, caràctérisé en ce que la lance à air (9) est insérée dans un bouchon creux, qui est inséré dans une tubulure (2) en . rendant étanches les extrémités ouvertes de la tubulure (2), le bouchon étant rétréci dans la zone centrale de la tubulure (2) et formant une fente périphérique de passage de fluide avec la paroi de tubulure et moyennant quoi un passage de fluide (17) est formé dans la zone du rétrécissement vers l'intérieur creux du bouchon, qui se trouve dans une liaison ouverte au niveau de l'écoulement avec la lance à air (9).

13. Couvercle d'éléments selon la revendication 1 et selon l'une quelconque des revendications 7 à 12, **caractérisé en ce que** le deuxième moyen de liaison est formé par une pièce de liaison (10), qui est conçue à la façon d'un tube et peut être emboîtée, en étant étanche par ses extrémités, dans deux branchements ou tubulures (2) de couvercles (1) voisins.
